# FASCICULE DE BREVET EUROPEEN

(11) **EP 2 678 118 B1**
(45) Date de publication et mention de la délivrance du brevet: **31.12.2014**
(21) Numéro de dépôt: 12709942.2
(22) Date de dépôt: 20.02.2012
(51) Int. Cl.: B05B 11/00

(54) **DISTRIBUTEUR DE PRODUIT FLUIDE.**
FLÜSSIGPRODUKTVERTEILER
FLUID PRODUCT DISTRIBUTOR

(30) Priorité: 23.02.2011 FR 1151471
(43) Date de publication de la demande: 01.01.2014
(73) Titulaire: Aptar France SAS, 27110 Le Neubourg (FR)
(72) Inventeur: MULLER, Patrick, F-27600 Saint Aubin Sur Gaillon (FR); STUART, Bruno, F-27350 Hauville (FR)
(74) Mandataire: CAPRI
(86) Numéro de dépôt international: PCT/FR2012/050360
(87) Numéro de publication internationale: WO 2012/114035

(56) Documents cités:
- FR-A1- 2 877 324
- US-A1- 2005 109 794

## Description

La présente invention concerne un distributeur de produit fluide comprenant un réservoir de produit fluide au moins localement transparent et un tube de guidage qui s'étend dans le réservoir. Les domaines d'application privilégiés de la présente invention sont ceux de la parfumerie, de la cosmétique ou encore de la pharmacie.

Dans l'art antérieur, on connaît déjà le document FR-2 877 324 qui décrit un distributeur de produit fluide comprenant un tube d'habillage qui s'étend dans un réservoir de produit fluide jusqu'à proximité de son fond. Ce tube d'habillage est engagé autour du corps d'une pompe comprenant un tube plongeur. De la sorte, le tube d'habillage s'étend autour du tube plongeur. Le tube d'habillage de ce document n'a qu'une fonction purement esthétique, servant en particulier à masquer le tube plongeur.

Etant donné que le produit fluide est destiné à être distribué, son niveau dans le réservoir a tendance à diminuer. Pour certains produits fluides, et dans certains réservoirs, il n'est pas aisé ou possible de repérer le niveau de produit fluide à l'intérieur du réservoir. Ceci est particulièrement le cas lorsque le réservoir est partiellement ou majoritairement opaque. La texture de la surface externe du réservoir peut également empêcher de voir le niveau de produit fluide à l'intérieur du réservoir. De même, un réservoir certes transparent, mais fortement coloré, ne permet pas non plus de voir le niveau de produit fluide dans le réservoir.

Dans l'art antérieur, on connaît le document US2005/0109794 qui décrit un distributeur selon le préambule de la revendication 1.

La présente invention a pour but de remédier à cet inconvénient précité de l'art antérieur en définissant un distributeur dont le niveau de produit fluide dans le réservoir est plus facilement visible ou lisible.

Pour ce faire, la présente invention propose un distributeur selon la revendication 1. Le tube de guidage peut être un tube d'habillage comme dans le document de l'art antérieur FR-2 877 324 ou encore un simple tube plongeur raccordé à la sortie du réservoir, par exemple par l'intermédiaire d'un organe de distribution tel qu'une pompe ou une valve. L'anneau de jauge suit le niveau de produit fluide à l'intérieur du réservoir à la manière d'un flotteur, en étant toutefois guidé axialement par le tube de guidage. On peut également dire que l'anneau de jauge coulisse sensiblement sans frottement le long du tube de guidage à mesure que le niveau de produit fluide varie dans le réservoir. Du fait que l'anneau de jauge est guidé, il ne peut en aucun cas gêner la distribution du produit fluide, par exemple en obturant la sortie du réservoir. L'anneau de jauge est donc libre de se déplacer, mais uniquement le long du tube de guidage, qui est de préférence disposé axialement, et même verticalement, à l'intérieur du réservoir. L'anneau de jauge est différent d'un piston suiveur conventionnel qui se déplace à frottement étanche sous l'effet d'une dépression dans le réservoir. En aucun cas, le piston suiveur ne flotte sur ou dans le produit fluide du réservoir. L'anneau de jauge peut servir à couper l'éventation lorsque le niveau du produit fluide dans le réservoir atteint un certain niveau maximum.

Selon une caractéristique et avantageuse de l'invention, le réservoir comprend au moins une fenêtre basse et une fenêtre haute à travers lesquelles l'anneau de jauge est visible. De préférence, les fenêtres sont pourvues de lentilles grossissantes. Ainsi, le réservoir peut être entièrement opaque, hormis au niveau des fenêtres à travers lesquelles l'anneau de jauge peut être observé par l'utilisateur. Les lentilles grossissantes permettent d'améliorer la visibilité de l'anneau de jauge derrière les fenêtres.

Selon un mode de réalisation avantageux, le distributeur comprend en outre un organe de distribution tel qu'une pompe, et des moyens de fixation pour fixer l'organe de distribution sur le réservoir, le tube étant formé par les moyens de fixation, l'organe de distribution étant engagé dans le tube. Ainsi, le tube remplit une double fonction, à savoir celle de guidage de l'anneau de jauge et de moyen de réception pour l'organe de distribution. Avantageusement, l'anneau vient en contact étanche avec les moyens de fixation lorsque le réservoir est rempli. De cette manière, l'anneau de jauge remplit une fonction de fin de remplissage.

Avantageusement, le tube se prolonge jusqu'à proximité du fond du réservoir, le clapet de remplissage comprenant un siège de clapet formé dans le fond du réservoir et une pièce de clapet reçu dans le réservoir et comprenant un pointeau d'obturation destiné à venir en contact étanche sélectif ave le siège de clapet, le pointeau étant relié à des éléments élastiques de sollicitation, le tube appuyant sur ces éléments élastiques pour contraindre le pointeau sur son siège. De préférence, l'anneau de jauge repose sur la pièce de clapet lorsque le réservoir est vide. L'anneau de jauge est alors situé au niveau de la fenêtre basse du réservoir, et indique ainsi à l'utilisateur que le réservoir est vide.

Comme susmentionné, le tube de guidage peut être constitué par un tube plongeur, mais en variante préférentielle, le tube se prolonge jusqu'à proximité du fond du réservoir, l'organe de distribution étant pourvu d'un tube plongeur qui s'étend dans le réservoir, le tube entourant le tube plongeur pour le maintenir ou le guider dans le réservoir, notamment au niveau du fond du réservoir. En effet, le tube plongeur présente habituellement une légère courbure qui le dévie de l'axe du réservoir et qui pourrait empêcher ou perturber le bon fonctionnement du clapet bas de remplissage. En le maintenant ainsi sensiblement dans l'axe, on évite toute interférence avec le clapet de remplissage.

Selon encore un autre aspect de l'invention, le passage d'éventation peut être sélectivement obturé par des moyens d'obturation actionnables par rotation d'un poussoir monté sur l'organe de distribution.

L'esprit de l'invention réside dans le guidage d'un élément indicateur de niveau de fluide le long d'un tube qui s'étend à l'intérieur du réservoir. La forme annulaire de cet élément est avantageuse, car cela permet de faire coulisser l'élément sans orientation autour du tube. Une application privilégiée de ce moyen d'indication de niveau est dans un distributeur rechargeable comprenant un clapet de remplissage et un passage d'éventation qui peut éventuellement être obturé en fin d'opération de remplissage par l'anneau de jauge.

L'invention sera maintenant plus amplement décrite en référence aux dessins joints donnant à titre d'exemple non limitatif un mode de réalisation de l'invention.

Sur les figures :
La figure 1 est une vue en coupe transversale verticale à travers un distributeur réalisé selon l'invention,
La figure 2 est une vue latérale du distributeur de la figure 1,
La figure 3 est une vue en perspective éclatée de la partie supérieure du distributeur des figures 1 et 2, et
La figure 4 est une vue similaire à celle de la figure 3 pour la partie basse du distributeur.

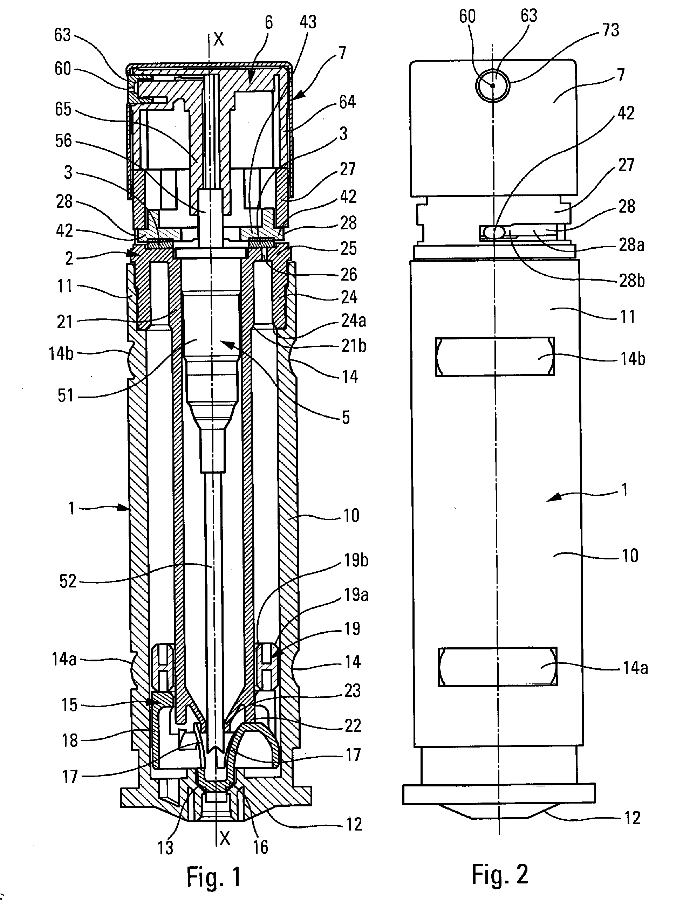

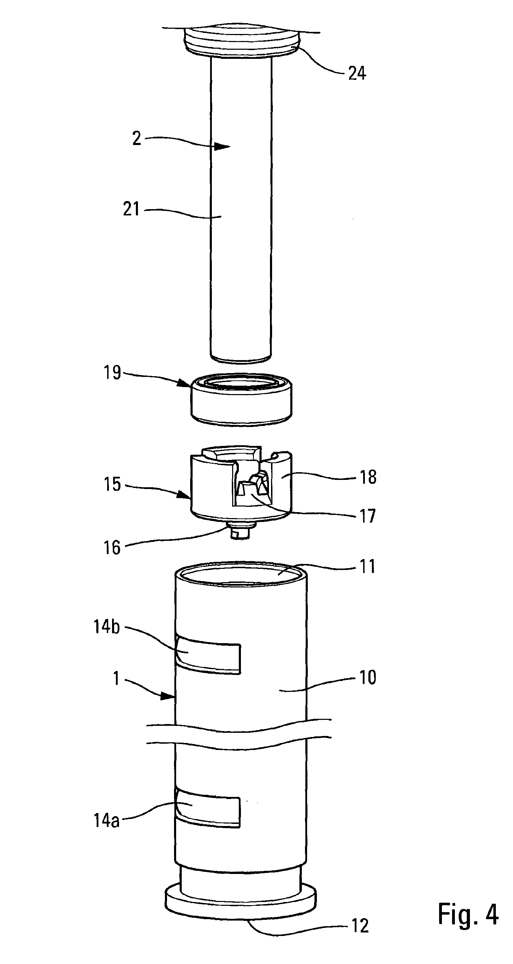

On se référera indifféremment à l'ensemble des figures 1 à 4 pour décrire en détail la structure et le fonctionnement d'un distributeur de produit fluide réalisé selon une forme de réalisation non limitative de l'invention.

Le distributeur comprend un réservoir de produit fluide 1 formant un fût sensiblement cylindrique 10 obturé à son extrémité inférieure par un fond 12 définissant un siège de clapet 13. A son extrémité opposée, le fût 10 définit une ouverture sous la forme d'un col 11 formant intérieurement des profils de fixation. Le fût 10 comprend quatre fenêtres de visualisation 14, 14a, 14b à travers lesquelles on peut apercevoir l'intérieur du réservoir. On peut par exemple prévoir deux fenêtres hautes et deux fenêtres basses. Une des fenêtres hautes 14b peut être pourvue d'une lentille grossissante, tout comme une des fenêtres basses 14a. A la place de ces fenêtres, on peut également prévoir que le fût 10 est totalement ou partiellement transparent. On peut aussi imaginer une ou plusieurs fenêtre(s) verticale(s) qui s'étend(ent) sur toute ou partie de la hauteur du fût 10. L'essentiel est que l'utilisateur puisse voir l'intérieur du réservoir, au moins en partie basse et en partie haute correspondant aux configurations vide et remplie du réservoir.

Le réservoir 1 comprend également une pièce de clapet 15 qui est disposée dans le réservoir à proximité du fond 12. La pièce de clapet 15 comprend un pointeau de clapet 16 destiné à venir en contact étanche sélectif avec le siège 13 du fond 12, formant ainsi un clapet de remplissage. Le pointeau 16 est sollicité par des pattes ou lames élastiques 17 qui rejoignent une couronne de montage 18 en prise à l'intérieur du réservoir. On peut par exemple prévoir que les pattes 17 soient légèrement contraintes afin que le pointeau 16 appuie légèrement contre son siège 13. L'ouverture du clapet se fait en repoussant le pointeau 16 hors de contact du siège 13 en contraignant les pattes élastiques 17.

Le distributeur comprend également des moyens de fixation 2 permettant de fixer de manière stable et étanche un organe de distribution 5 dans le col 11 du réservoir 1. Ces moyens de fixation 2 comprennent une bague de fixation 24 en prise étanche dans le col 11, un plateau annulaire 25 qui s'étend vers l'intérieur à partir de l'extrémité supérieure de la bague de fixation 24 et un tube 21 qui s'étend vers le bas à partir de la périphérie interne du plateau 25 à l'intérieur de la bague de fixation 24. Le tube 21 est sensiblement cylindrique et s'étend jusqu'à proximité du fond 12. On peut remarquer que le bord inférieur 22 du tube 21 vient en contact des pattes élastiques 17 pour les pré-contraindre de manière à appuyer le pointeau 16 contre le siège 13. Ainsi, le tube 21 remplit une première fonction d'appui et de précontrainte des pattes élastiques 17. On peut également remarquer que le tube 21 est entouré par un anneau de jauge 19 qui est librement déplaçable le long du tube 21. Ainsi, le tube plongeur 21 remplit une fonction de guidage axial pour l'anneau de jauge 19. L'anneau de jauge 19 est réalisé en un matériau qui est moins dense que le produit fluide contenu dans le réservoir, de sorte qu'il flotte à la surface du produit fluide. Ainsi, l'anneau de jauge 19 donne une indication visuelle directe du niveau de produit fluide à l'intérieur du réservoir. Dans la position représentée sur la figure 1, le réservoir est sensiblement vide, et l'anneau de jauge 19 repose sur la couronne de montage 18 de la pièce de clapet 15. Il est alors visible à travers la fenêtre 14a. Lorsque le réservoir est plein, l'anneau de jauge 19 est situé à proximité de la fenêtre haute 14b et peut être observé par l'utilisateur. Avantageusement, l'anneau de jauge 19 comprend deux bords concentriques d'étanchéité 19a, 19b destinés à venir en contact étanche avec deux sièges d'étanchéité annulaires 21 b et 24a formés respectivement au niveau du tube 21 et de la bague de fixation 24. Le contact étanche est établi lorsque le réservoir est rempli et que l'anneau 19 est visible à travers la fenêtre 14b.

Selon l'invention, un passage d'éventation 26 est formé à travers le plateau 25, et fait communiquer l'intérieur du réservoir 1 avec l'extérieur. Ainsi, lorsque du produit fluide est injecté dans le réservoir à travers le clapet de remplissage (formé par la siège 13 et le pointeau 16), l'air initialement présent dans le réservoir peut s'échapper à travers le trou d'éventation 26. Le remplissage du réservoir se produit jusqu'à ce que la jauge 19 vienne en contact étanche avec les sièges 21 b et 24a : le réservoir est alors complètement rempli. En variante, lorsque l'anneau de jauge 19 ne réalise pas d'étanchéité avec les moyens de fixation 2, le remplissage s'effectue jusqu'à ce que produit atteint le trou d'éventation 26. On verra ci-après de quelle manière le trou d'éventation 26 est obturé pour éviter toute fuite.

Comme précédemment mentionné, le tube 21 sert de moyen de réception pour un organe de distribution 5, qui peut être une pompe ou une valve. Plus précisément, l'organe de distribution 5 comprend un corps 51 emmanché de manière fixe et étanche dans le tube 21. L'organe de distribution 5 comprend également une tige d'actionnement 56 qui est déplaçable en va-et-vient le long d'un axe vertical X. Ainsi, en enfonçant la tige 56 dans le corps 51, du produit fluide, sous forme dosée ou non, est refoulé à travers la tige d'actionnement 56. Il s'agit là d'une conception tout à fait classique pour une pompe ou une valve dans les domaines de la parfumerie, de la cosmétique ou encore de la pharmacie. On peut remarquer que l'organe de distribution 5 comprend également un tube plongeur 52 qui s'étend dans le tube 21 jusqu'à proximité du fond 12. Ce tube plongeur 52 est maintenu ou guidé de manière parfaitement axiale et fixe par une petite lèvre de maintien 23 formée à l'extrémité inférieure d'un petit cône qui s'étend vers le bas dans le tube 21. Ainsi, le tube plongeur 52 est guidé dans ce cône pour finalement passer à travers la lèvre de maintien. Par conséquent, le tube 21 remplit également une fonction de maintien du tube plongeur, empêchant ainsi qu'il ne perturbe le bon fonctionnement du clapet de remplissage.

Le tube 21, en masquant le tube plongeur 52 souvent inesthétique, fait fonction de décor ou peut supporter un décor. Il peut également servir à l'inscription de graduations pour faciliter la lecture du niveau de produit fluide dans le réservoir.

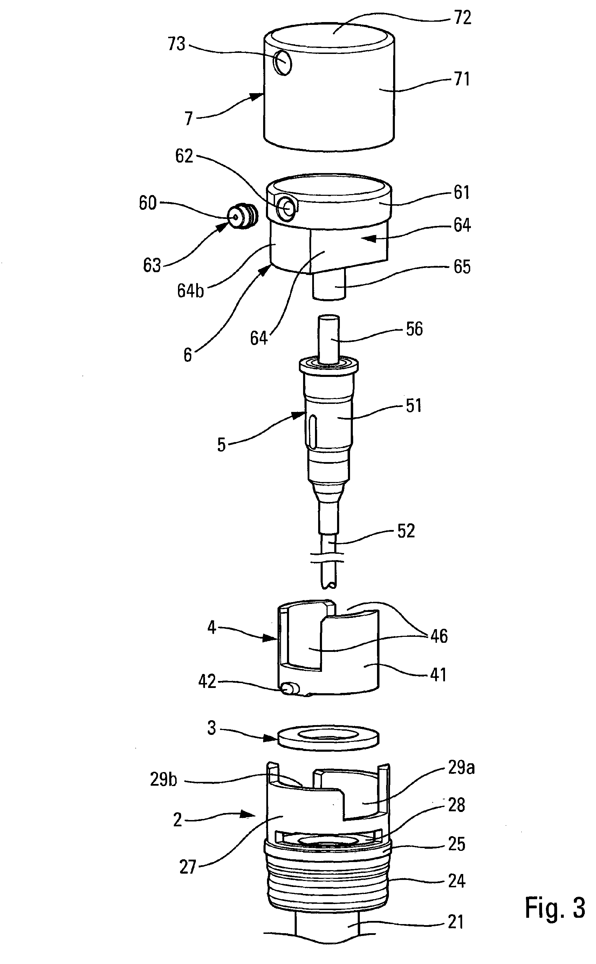

Le distributeur de l'invention comprend également un poussoir comprenant un noyau 6 et une enveloppe externe 7. Le noyau 6 peut être réalisé par injection moulage de matière plastique, alors que l'enveloppe 7 peut être réalisée en métal pour des raisons esthétiques. Le noyau 6 comprend un manchon de raccordement 65 engagé sur l'extrémité de la tige d'actionnement 56. Ce manchon de raccordement 65 se prolonge dans le noyau 6 jusqu'au niveau d'un gicleur 63 formant un orifice de distribution 60. L'enveloppe 7 est réalisée avec un trou 73 au niveau du gicleur 63. Comme on peut le voir sur la figure 3, le noyau 6 forme un renfort annulaire 61 au niveau duquel est formé un logement 62 pour la réception du gicleur 63. En dessous de ce renfort annulaire 61, le noyau 6 forme une jupe 64. Hormis la configuration de la jupe 64, le poussoir 6, 7 est de conception conventionnelle. En effet, la jupe 64 se distingue par le fait qu'elle présente une section transversale horizontale de forme oblongue ou grossièrement rectangulaire. La jupe comprend deux longues faces latérales planes parallèles 64a reliées par deux faces arquées courtes 64b.

Pour en revenir aux moyens de fixation 2, ils comprennent également une douille 27 qui s'étend vers le haut à partir du plateau 25, sensiblement dans le prolongement de la bague de fixation 24. Il est toutefois envisageable que la douille 27 ne s'étende pas vraiment dans le prolongement de la douille 24. La douille 27 forme un ou plusieurs chemin(s) de came 28, plus clairement visible sur les figures 2 et 3. Ces chemins de came 28 comprennent une section haute 28a raccordée à une section basse 28b. Ainsi, ces deux sections définissent deux positions axiales décalées. On peut par exemple prévoir que le décalage entre les deux sections soit de l'ordre d'un ou de quelques dixièmes de mm. On peut prévoir deux ou trois chemins de came 28. En se référant toujours à la figure 3, on peut également remarquer que la douille 27 forme deux échancrures 29a qui sont disposées de manière diamétralement opposée et séparée par deux bords de crêtes 29b qui sont plus élevés axialement. Le profil crénelé formé par les échancrures 29a et les bords de crêtes 29b constitue avec la jupe 64 du noyau 6 du poussoir un système de verrouillage du poussoir. En effet, lorsque la jupe 64 est située sur les bords de crêtes 29b, il est impossible de déplacer le poussoir : les faces 64a ou 64b reposant sur les bords de crête 29b. En revanche, lorsque les longues faces planes 64a de la jupe 64 sont engagées dans les échancrures 29a, le poussoir est déplaçable axialement en va-et-vient. Le poussoir 6, 7 peut ainsi être déplacé de la position verrouillée à la position déverrouillée en un quart de tour.

Selon l'invention, le trou d'éventation 26 formé dans le plateau 25 est obturable au moyen d'un joint annulaire plat qui fait office de moyen d'obturation 3. Le joint 3 est disposé sur le plateau 25. On comprend aisément qu'en appuyant le joint 3 sur le plateau 25, le trou d'éventation 26 est obturé. En revanche, si l'on relâche la pression sur le joint 3, le trou d'éventation 26 communique avec l'extérieur en définissant un passage d'éventation. Pour contraindre sélectivement le joint 3 sur le trou d'éventation 26, la présente invention prévoit des moyens de commande 4 qui coopèrent à la fois avec le poussoir, les moyens de fixation et les moyens d'obturation. Plus précisément, les moyens de commande 4 coopèrent avec la jupe 64 du noyau 6, avec les chemins de came 28 de la douille 27 et le joint 3. Pour cela, les moyens de commande 4 comprennent une bague crénelée 41 formant deux découpes 46 pour la réception de la jupe 64 du noyau 6 : les deux longues faces planes 64a traversant les découpes 46. Le poussoir et les moyens de commande sont donc solidaires en rotation, mais peuvent se déplacer axialement l'un par rapport à l'autre. La bague crénelée 41 forme également deux ergots de came 42 en prises dans les deux chemins de came 28 de la douille 27. Ces ergots de came 42 font saillie radialement vers l'extérieur et sont situés de manière diamétralement opposée en dessous des deux découpes 46, comme on peut le voir sur la figure 3. Les moyens de commande 4 comprennent également une bride annulaire 43 qui s'étend juste au-dessus du joint 3 et qui a pour fonction de l'écraser sur le plateau 25.

Pour écraser le joint 3 sur le plateau 25, il suffit d'entraîner le poussoir en rotation sur lui-même autour de l'axe X. Le poussoir entraîne les moyens de commande 4 en rotation, étant donné que la jupe 64 est prisonnière des deux découpes 46. Toutefois, les moyens de commande 4 ne sont pas solidaires du poussoir dans la direction axiale X. En d'autres termes, la jupe 64 peut se déplacer axialement à l'intérieur des découpes 46. Inversement, les moyens de commande 4 peuvent se déplacer axialement par rapport au poussoir. Cela permet aux moyens de commande 4 de se déplacer axialement sur une très courte distance en suivant les chemins de came 28. En effet, les deux ergots 42 des moyens de commande 4 sont engagés à l'intérieur des chemins de came 28 et suivent ces chemins de came de manière à passer de la section haute 28a à la section basse 28b, et inversement. Lorsque les ergots 42 sont situés dans les sections basses 28b comme représenté sur la figure 2, la bride 43 appuie fortement contre le joint 3 et l'écrase sur le plateau 25. Le trou d'éventation 26 est alors obturé. En revanche, lorsque les ergots 42 sont situés au niveau des sections hautes 28a, le plateau 43 n'exerce aucune pression sur le joint 3, et le trou d'éventation 26 peut communiquer avec l'extérieur en formant un passage d'éventation.

D'autre part, comme précédemment mentionné, le distributeur intègre un système de verrouillage du poussoir formé conjointement par la jupe 64 et la douille 27. Lorsque la jupe 64 peut pénétrer dans les échancrures 29a, le poussoir est dans la position déverrouillée. Cette position déverrouillée correspond selon l'invention au positionnement des ergots 42 dans les sections hautes 28a des chemins de came 28. A l'inverse, lorsque la jupe 64 est en butée sur le bord de crête 29b, les ergots 42 sont situés dans les sections basses 28b. En d'autres termes, la position verrouillée du poussoir correspond à la configuration d'obturation et la position déverrouillée correspond à la position d'éventation. Le passage d'éventation est ouvert en position déverrouillée et est fermé en position verrouillée. Fonctionnellement, on peut dire que les moyens d'obturation 3 sont commutables entre une condition d'obturation dans laquelle le passage d'éventation est obturé et le poussoir en position verrouillée à partir d'une condition d'ouverture dans laquelle le passage d'éventation est dégagé et le poussoir en position déverrouillée.

Bien entendu, il est possible de mettre en oeuvre la présente invention sans mettre en oeuvre obligatoirement un système de verrouillage rotatif du poussoir. De même, l'anneau de jauge 19 guidé par le tube 21 peut mis en oeuvre indépendamment du système d'éventation obturable. Il en est de même du guidage du tube plongeur qui peut être mis en oeuvre indépendamment. Il est également envisageable d'intégrer les moyens de commande 4 au poussoir, de sorte que le poussoir vienne en contact direct avec le joint 3 en position verrouillée et hors de contact du joint 3 en position déverrouillée.

Grâce à l'invention, on dispose d'un distributeur rechargeable intégrant un système d'obturation du passage d'éventation particulièrement simple à manipuler et/ou des moyens d'indication de niveau de produit fluide particulièrement avantageux.

## Revendications

1. Distributeur de produit fluide comprenant :
- un réservoir de produit fluide (1) qui est au moins localement transparent,
- un tube de guidage (21) s'étendant dans le réservoir (1), un anneau de jauge (19) étant engagé librement autour du tube de guidage (21) et flottant dans le produit fluide de manière à indiquer visuellement le niveau de produit fluide dans le réservoir (1),
**caractérisé en ce que** le réservoir (1) comprend un fond (12) pourvu d'un clapet de remplissage (13, 15) et un passage d'éventation (26) pour laisser s'échapper l'air du réservoir (1) lorsqu'on le remplit à travers le clapet (13, 15).

2. Distributeur selon la revendication 1, dans lequel le réservoir (1) comprend au moins une fenêtre basse (14a) et une fenêtre haute (14b) à travers lesquelles l'anneau de jauge est visible.

3. Distributeur selon la revendication 2, dans lequel les fenêtres (14a, 14b) sont pourvues de lentilles grossissantes.

4. Distributeur selon l'une quelconque des revendications précédentes, comprenant en outre :
- un organe de distribution (5) tel qu'une pompe, et
- des moyens de fixation (2) pour fixer l'organe de distribution (5) sur le réservoir (1),
dans lequel le tube (21) est formé par les moyens de fixation (2), l'organe de distribution (5) étant engagé dans le tube (21).

5. Distributeur selon la revendication 4, dans lequel l'anneau (19) vient en contact étanche avec les moyens de fixation (2) lorsque le réservoir est rempli.

6. Distributeur selon la revendication 5, dans lequel le tube (21) se prolonge jusqu'à proximité du fond (12) du réservoir (1), le clapet de remplissage (13, 15) comprenant un siège de clapet (13) formé dans le fond du réservoir (1) et une pièce de clapet (15) reçu dans le réservoir (1) et comprenant un pointeau d'obturation (16) destiné à venir en contact étanche sélectif ave le siège de clapet (13), le pointeau (16) étant relié à des éléments élastiques de sollicitation (17), le tube (21) appuyant sur ces éléments élastiques (17) pour contraindre le pointeau (16) sur son siège (13).

7. Distributeur selon la revendication 6, dans lequel l'anneau de jauge (19) repose sur la pièce de clapet (15) lorsque le réservoir (1) est vide.

8. Distributeur selon l'une quelconque des revendications précédentes, dans lequel le tube (21) se prolonge jusqu'à proximité du fond (12) du réservoir (1), l'organe de distribution (5) étant pourvu d'un tube plongeur (52) qui s'étend dans le réservoir (1), le tube (21) entourant le tube plongeur (52) pour le guider dans le réservoir (1), notamment au niveau du fond (12) du réservoir.

9. Distributeur selon l'une quelconque des revendications précédentes, dans lequel le passage d'éventation (26) est sélectivement obturé par des moyens d'obturation (3) actionnables par rotation d'un poussoir (6, 7) monté sur l'organe de distribution (5).

## Patentansprüche

1. Abgabevorrichtung für ein fluidförmiges Produkt, die Folgendes umfasst:
- einen Behälter (1) für das fluidförmige Produkt, der zumindest stellenweise transparent ist,
- ein Führungsrohr (21), das sich in den Behälter (1) hinein erstreckt, einen Anzeigering (19) der um das Führungsrohr (21) herum in freiem Eingriff steht und in dem fluidförmigen Produkt derart schwimmt, dass er visuell die Höhe des fluidförmigen Produktes in dem Behälter (1) anzeigt,
**dadurch gekennzeichnet, dass** der Behälter (1) einen Boden (12) umfasst, der mit einem Nachfüll-Ventil (13, 15) und einem Entlüftungsdurchgang (26) versehen ist, damit Luft aus dem Behälter (1) ausströmen kann, wenn man ihn durch das Ventil (13, 15) füllt.

2. Abgabevorrichtung nach Anspruch 1, bei welcher der Behälter (1) zumindest ein unteres Fenster (14a) und ein oberes Fenster (14b) umfasst, durch die hindurch der Anzeigering sichtbar ist.

3. Abgabevorrichtung nach Anspruch 2, bei der die Fenster (14a, 14b) mit Vergrößerungslinsen versehen sind.

4. Abgabevorrichtung nach einem der vorhergehenden Ansprüche, die weiterhin Folgendes umfasst:
- ein Abgabeorgan (5) wie zum Beispiel eine Pumpe, und
- Befestigungseinrichtungen (2), die dazu dienen, das Abgabeorgan (5) auf dem Behälter (1) zu befestigen,
wobei das Rohr (21) von den Befestigungseinrichtungen (2) gebildet ist und das Abgabeorgan (5) in dem Rohr (21) in Eingriff steht.

5. Abgabevorrichtung nach Anspruch 4, bei welcher der Ring (19) in dichte Berührung mit den Befestigungseinrichtungen (2) kommt, wenn der Behälter aufgefüllt wird.

6. Abgabevorrichtung nach Anspruch 5, bei der das Rohr (21) bis in die Nähe des Bodens (12) des Behälters (1) verlängert ist, wobei das Nachfüll-Ventil (13, 15) einen Ventilsitz (13) umfasst, der im Boden des Behälters (1) ausgebildet ist, sowie einen Ventilkörper (15) der in dem Behälter (1) aufgenommen ist und eine Dicht-Nadel (16) aufweist, die dazu dient, wahlweise in eine dichte Berührung mit dem Ventilsitz (13) zu treten, wobei die Nadel (16) mit elastischen Vorspann-Elementen (17) verbunden ist und das Rohr (21) an den elastischen Elementen (17) anliegt, um die Nadel (16) auf ihren Sitz (13) zu pressen.

7. Abgabevorrichtung nach Anspruch 6, bei welcher der Anzeigering (19) auf dem Ventilkörper (15) ruht, wenn der Behälter (1) leer ist.

8. Abgabevorrichtung nach einem der vorhergehenden Ansprüche, bei welcher sich das Rohr (21) bis in die Nähe des Bodens (12) des Behälters (1) erstreckt, wobei das Abgabeorgan (5) mit einem Verlängerungsrohr (52) versehen ist, dass sich in den Behälter (1) hinein erstreckt, wobei das Rohr (21) das Verlängerungsrohr (52) umgibt, um dieses in dem Behälter (1) insbesondere im Bereich des Bodens (12) des Behälters zu führen.

9. Abgabevorrichtung nach einem der vorhergehenden Ansprüche, bei welcher der Entlüftungsdurchgang (26) wahlweise durch Verschlusseinrichtungen (3) verschlossen wird, die durch eine Drehung eines Drückers (6, 7) betätigbar sind, der auf dem Abgabeorgan (5) montiert ist.

## Claims

1. A fluid dispenser comprising:
• a fluid reservoir (1) that is transparent, at least locally; and
• a guide tube (21) that extends in the reservoir (1), a gauge ring (19) that is engaged freely around the guide tube (21) and that floats in the fluid in such a manner as to indicate visually the fluid level in the reservoir (1),
the dispenser being **characterized in that** the reservoir (1) includes a bottom wall (12) that is provided with a filling valve (13, 15), and a vent passage (26) for allowing the air from the reservoir (1) to escape while said reservoir is being filled through the valve (13, 15).

2. A dispenser according to claim 1, wherein the reservoir (1) includes at least one bottom window (14a) and one top window (14b) through which the gauge ring is visible.

3. A dispenser according to claim 2, wherein the windows (14a, 14b) are provided with magnifying lenses.

4. A dispenser according to any preceding claim, further comprising:
• a dispenser member (5) such as a pump; and
• fastener means (2) for fastening the dispenser member (5) on the reservoir (1);
wherein the tube (21) is formed by the fastener means (2), the dispenser member (5) being engaged in the tube (21).

5. A dispenser according to claim 4, wherein the ring (19) comes into leaktight contact with the fastener means (2) when the reservoir is full.

6. A dispenser according to claim 5, wherein the tube (21) extends into the proximity of the bottom wall (12) of the reservoir (1), the filling valve (13, 15) comprising a valve seat (13) formed in the bottom wall of the reservoir (1) and a valve member (15) received in the reservoir (1) and further comprising a closure pin (16) for selectively coming into leaktight contact with the valve seat (13), the pin (16) being connected to resilient drive elements (17), the tube (21) pressing on the resilient elements (17) so as to urge the pin (16) against its seat (13).

7. A dispenser according to claim 6, wherein the gauge ring (19) bears on the valve member (15) when the reservoir (1) is empty.

8. A dispenser according to any preceding claim, wherein the tube (21) extends into the proximity of the bottom wall (12) of the reservoir (1), the dispenser member (5) being provided with a dip tube (52) that extends into the reservoir (1), the tube (21) surrounding the dip tube (52) so as to guide it into the reservoir (1), in particular at the bottom (12) of the reservoir.

9. A dispenser according to any preceding claim, wherein the vent passage (26) is closed selectively by closure means (3) that are actuated by turning a pusher (6, 7) that is mounted on the dispenser member (5).
